# EUROPEAN PATENT SPECIFICATION

(11) **EP 2 265 917 B1**
(45) Date of publication and mention of the grant of the patent: **31.07.2013**
(21) Application number: 08793544.1
(22) Date of filing: 28.08.2008
(51) Int. Cl.: G01M 3/16

(54) **LEAK SENSOR APPARATUS FOR SENSING MOISTURE**
LECKSENSORVORRICHTUNG ZUR FEUCHTIGKEITSERFASSUNG
APPAREIL DÉTECTEUR DE FUITES POUR LA DÉTECTION D HUMIDITÉ

(30) Priority: 24.04.2008 KR 20080038335; 21.07.2008 KR 20080070677
(43) Date of publication of application: 29.12.2010
(73) Proprietor: Yumin System Technology Co., Ltd., Gyeonggi-do 437-801 (KR); Yu, Dong Geun, Seoul 139-770 (KR)
(72) Inventor: YU, Dong Geun, Seoul 139-770 (KR); YU, Hong Geun, Suwon Gyeonggi-do 441-759 (KR)
(74) Representative: Grosse, Felix Christopher
(86) International application number: PCT/KR2008/005041
(87) International publication number: WO 2009/131280

(56) References cited:
- DE-A1- 3 544 264
- GB-A- 2 218 837
- JP-A- 8 210 939
- JP-A- 2004 093 246
- KR-A- 20070 005 234
- US-A1- 2007 046 481
- US-A1- 2009 173 143
- US-B2- 7 292 155

## Description

### Technical Field

The present invention relates to a leak sensor apparatus for sensing moisture, and in particular to a leak sensor apparatus for sensing moisture which is easy to install since it can be directly attached to a leakage possible portion (wall, pipe, facility or something) in a tape type, and it can be easily installed without a bracket, and a sensor tape can be cut by a desired length and can be used.

### Background Art

Various kinds of leak sensors are used in the industry for sensing a water leakage or an oil leakage in a leakage possible portion.

As representative examples, there are a cable type leak sensor, a band type leak sensor, and a module type leak sensor.

Here, the cable type leak sensor is a water or oil leakage sensor which makes it possible to more reliably sense the leakage of various liquids (water, oil or something) as well as which makes it possible to fast and precisely detect even leakage position.

In case of a water leakage or an oil leakage, a sensor cable is capable of sensing a certain change (electric potential difference) of a voltage by means of a resistance of leaked liquid along with its current for thereby advantageously precisely detecting a water or oil leakage and its position.

However, it is disadvantageous that a cable type leak sensor is expensive, and the length of a sensor cable is unchangeably set, which leads to a limited choice by customer (7M, 15M, 30M). In addition, when installing a sensor, it is needed to additionally install a bracket, which is hard and further costs. Removing moisture takes a long time after sensing moisture. A connection with an external device has a lot of problems.

The band type lead sensor is designed to sense a leakage depending on a changing resistance value as a resistance value changes when moisture contacts with an electric cable while current flows along the electric cable.

A resistance value operable by means of a leak sensor is OΩ~50MΩ, and its output is 30V DCV in max, and its cable length is 50m in max, and a band sensor length is 10m in max.

The above band type leak sensor is capable of sensing a leakage of a relatively wider area at a lower cost, and its installation is easy, but an error occurs a lot due to a high moisture or an external impact, and it is very hard to detect an accurate leakage position. Its installation is very limited, and a complicated installation method makes a lot of troubles. An initial investment costs a lot due to a network or a PC system. Since the length of a moisture sensor cable is unchangeably set, a choice by a customer is very limited (IM, 2M, 5M, 10M, 20M), and the product is so expensive as compared to its performance. When installing the above sensor, since a bracket is additionally needed for fixing it on a floor, an installation is complicated, and additional money is needed. When connecting with an external device, only a relay contact method is used, which limits the uses of other connection devices.

The module type leak sensor is basically designed to receive a beam from a beam emission unit in a state that a liquid is not detected by installing a photo sensor (light receiver, and light emitter) in a plastic casing, but when a beam from a beam emission unit detects liquid, the light receiver cannot receive a beam due to a change in a refractive index.

At this time, the module sensor detects leakage. The input voltage of the module sensor is 12V DC-24V DC, and a response time is 50ms, and a use temperature is - 10°C~60°C, and the sensor casing is made of polypropylene.

The module type leak sensor is capable of detecting a leakage possible portion at a relatively lower price, and its installation is easy, and a self-alarm and alarm light can be outputted irrespective of its neighboring devices, and less error occurs with respect to a moisture, but and it is possible to detect only a specific portion leakage as compared to the cable type sensor. A hard connection with an external device is disadvantageous. An additional sensor fixing method is needed, and an installation of a product takes a long time. Since it is possible to detect only a limited specific portion leakage, when a leakage position is changed, detection might be impossible.

US 2007/046481 A1 refers to an four-conductor moisture detection sensor. Two of the conductors are protected by a water pervious dielectric layer whereas the other two are covered by a water impervious dielectric layer. Location of a water leak location can be determined by connecting the four conductors to a resistance bridge.

GB 2 218 837 A refers to a leakage sensor comprising a pair of spaced electrical conductors which are sandwiched parallel to each other between two strips of electrically insulating tapes. These tapes may be provided openings in order to expose the conductors to the environment.

### Disclosure of Invention

### Technical Problem

Accordingly, it is an object of the present invention to provide a moisture leak sensor apparatus which overcomes the problems encountered in the conventional art.

It is another object of the present invention to provide a moisture leak sensor apparatus which is easy to install since it can be directly attached to a leakage possible portion (wall, pipe, facility or something) in a tape type, and it can be easily installed without a bracket, and a sensor tape can be cut by a desired length and can be used.

### Technical Solution

To achieve the above objects, there is provided a leak sensor apparatus for sensing moisture formed in a tape shape for sensing moisture when leakage occurs, which comprises a base film, a conductive line layer; a protection film layer, wherein the base film, the conductive line layer, and the protection film layer are sequentially stacked in an upward direction; and a conductive line layer which includes a resistance line having a certain resistance value per unit area in a longitudinal direction, and a conductive line which is spaced apart from the resistance line and is formed in parallel with the resistance line, with the protection film layer being equipped with holes at regular intervals so that the resistance and conductive lines of the conductive line layer can be exposed to the outside.

The resistance line and conductive line of the conductive line layer are formed in multiple numbers in a mirror shape, and two conductive lines are further provided in a longitudinal direction, and resistors are provided between the conductive lines at regular intervals.

### Advantageous Effects

As described above, according to the leak sensor apparatus for sensing moisture according to the present invention, it is easy to install since it can be directly attached to a leakage possible portion (wall, pipe, facility or something) in a tape type, and it can be easily installed without a bracket, and a sensor tape can be cut by a desired length and can be easily used.

In addition, since the tape film is made of PET, PTFE, PVC or the like, the tape film is strong to a chemical solution such as strong acid, strong alkali or organic liquid.

When the leak sensor apparatus is installed on a floor, since a film is thin and is attached by means of a tape attaching method, a person, a facility, a cart or the like might walk or run over the apparatus, which ensures an easy installation and use.

The sensor tape might be cut and used, so multiple tapes might be attached to one controller (AMP).

The time needed for removing moisture after moisture is detected is short. Since the tape film is used, removing moisture is very easy.

Since the sensor tape is made in a printed method, a product price is low, and it is possible to reliably detect a leakage in a wide area at a lower cost.

### Brief Description of the Drawings

Figure 1 is a cross sectional view of the present invention.

Figure 2 is a view illustrating a pattern of a conductive line layer.

Figure 3 is a view illustrating a circuit construction of a pattern for a leak detection.

Figure 4 is a view illustrating a circuit construction of a pattern for a tape cutting detection.

Figure 5 is a view illustrating a type of a protection film layer.

Figure 6 is a view illustrating another embodiment of the present invention.

Figure 7 is a view illustrating a connection state of a controller and another tape.

Figure 8 is a view illustrating various shapes of a hole formed on a protection layer.

Figure 9 is a view illustrating various patterns of a conductive line layer.

### Best Mode for Carrying Out the Invention

In the present invention, a leak sensor apparatus for sensing moisture formed in a tape shape for sensing moisture when leakage occurs comprises a base film; a conductive line layer; a protection film layer, wherein the base film, the conductive line layer, and the protection film layer are sequentially stacked in an upward direction; and a conductive line layer which includes a resistance line having a certain resistance value per unit area in a longitudinal direction, and a conductive line which is spaced apart from the resistance line and is formed in parallel with the resistance line, with the protection film layer being equipped with holes at regular intervals so that the resistance and conductive lines of the conductive line layer can be exposed to the outside.

### Mode for the Invention

The leak sensor apparatus for sensing moisture according to the present invention will be described with reference to the accompanying drawings.

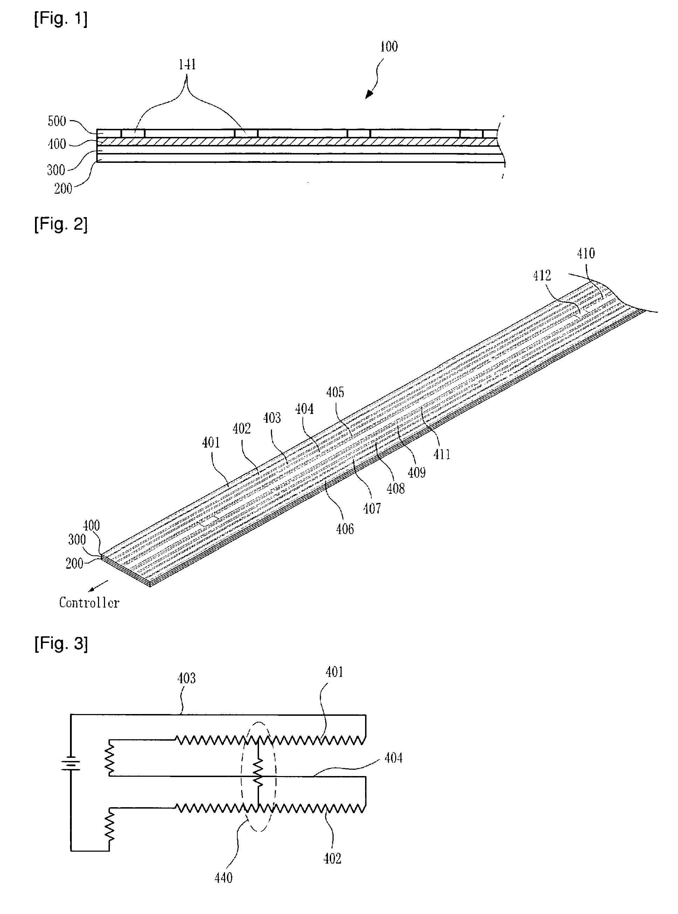

Figure 1 is a cross sectional view illustrating a moisture detection tape 100 according to the present invention, which comprises an adhesive layer 200, a base film layer 300, a conductive line layer 400, and a protection film layer 500, which are sequentially stacked from its bottom layer to its upper layer.

The adhesive layer 200 is attached to a leak possible portion and is made of an adhesive tape form.

The conductive line layer 400 is formed on an upper side of the base film layer 300, and the base film layer 300 is made of a PET, PE, PTFE, PVC or other Tefron materials for insulation and for printing the conductive line layer 400.

A plurality of conductive lines and resistors are formed in the conductive line layer 400 in a pattern type, and the conductive line layers are spaced apart in a longitudinal direction of the moisture detection tape 100 and are arranged on an upper surface of the base film layer 300 in parallel.

The protection film layer 500 is stacked on an upper side of the conductive line layer 400 for protecting the pattern of the conductive line layer 400 from an external impact and is made of PET, PE, PVC or Tefron materials.

Figure 2 is a view illustrating a pattern formation of the conductive line layer 400, and resistance lines 401, 402, 406 and 407 consist of conductive lines 403, 404, 408, 409, 410 and 411 printed with a silver compound, and a resistor 412.

The first resistance line 401 is printed in the outer most portion in a longitudinal direction of the conductive line layer 400 and has a constant resistance value per unit area, and the second resistance line 402 is spaced in an inner side of the first resistance line 401 in the same shape as the first resistance line 401.

The double conductive lines 403 and 404 printed with a silver compound are spaced apart and are sequentially formed in an inner side of the second resistance line 402.

As shown in Figure 3, the resistance lines 401 and 402 and the conductive lines 403 and 404 form a leak detection circuit. Here, the first conductive line 403, the first resistance line 401, the second conductive line 404, and the second resistance line 402 are connected in series by means of a connection device.

The resistance lines 401 and 402, the conductive lines 403 and 404, the mirror type resistance lines 406 and 407, and the conductive lines 408 and 409 are formed on the upper surface of the conductive line layer 400 in the same constructions in its outer and inner side, respectively.

So, when leakage is detected on the upper side of the moisture detection tape 100, a wider area can be detected.

The conductive lines 403, 404, 408 and 409 are made of pure conductive materials such as silver and have resistances of 0~20Ω, and the resistance lines 401, 402, 406 and 407 have the resistance values of about 50~500Ω.

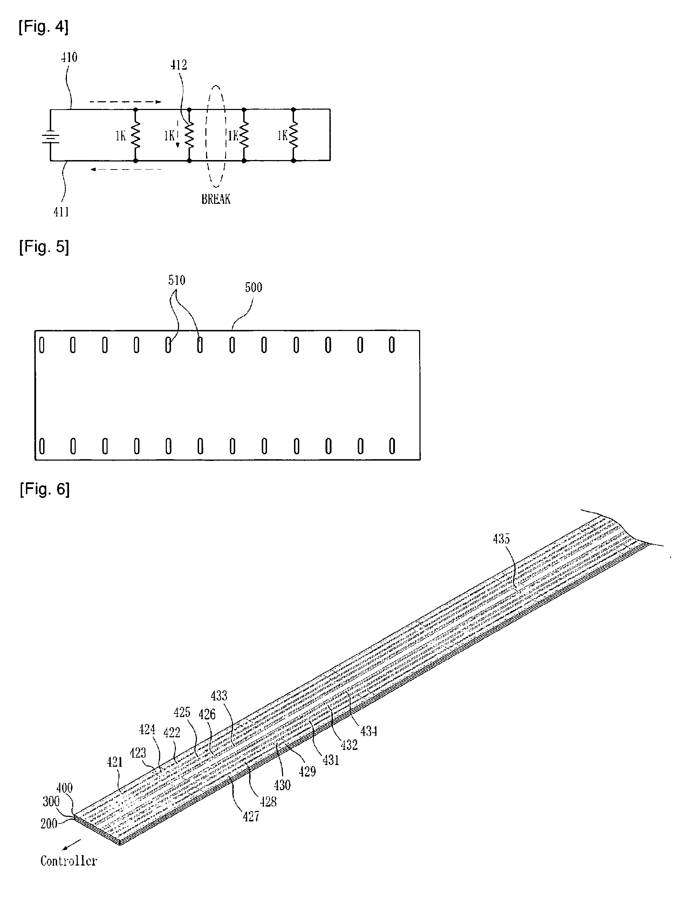

Two conductive lines 410 and 411 are spaced apart and formed between the resistance lines 401 and 402 and the conductive lines 403 and 404 and the mirror shaped resistance lines 406 and 407 and the conductive lines 408 and 409 on the upper surface of the conductive line layer 400, and the portions between the conductive lines 410 and 411 are connected by means of the resistors 412 at regular intervals, for thereby forming a circuit of Figure 4.

When the moisture detection tape 100 is cut, the cut portion is detected with the help of the above construction.

Figure 5 is a view illustrating a construction of the protection film layer. When the protection film layer 500 is stacked on the upper side of the conductive line layer 400, since it is substantially separated from the outside, the leakage cannot be detected in the conductive line layer 400 when leakage occurs, so the holes 510 are formed in each area. Here, the holes 510 are preferably formed in a longitudinal groove shape or a circular groove shape or other shapes in a width wise direction of the moisture detection tape 100 so that two resistance lines can be exposed to the outside. It is preferred that the interval between the holes is 0.5~1.5cm.

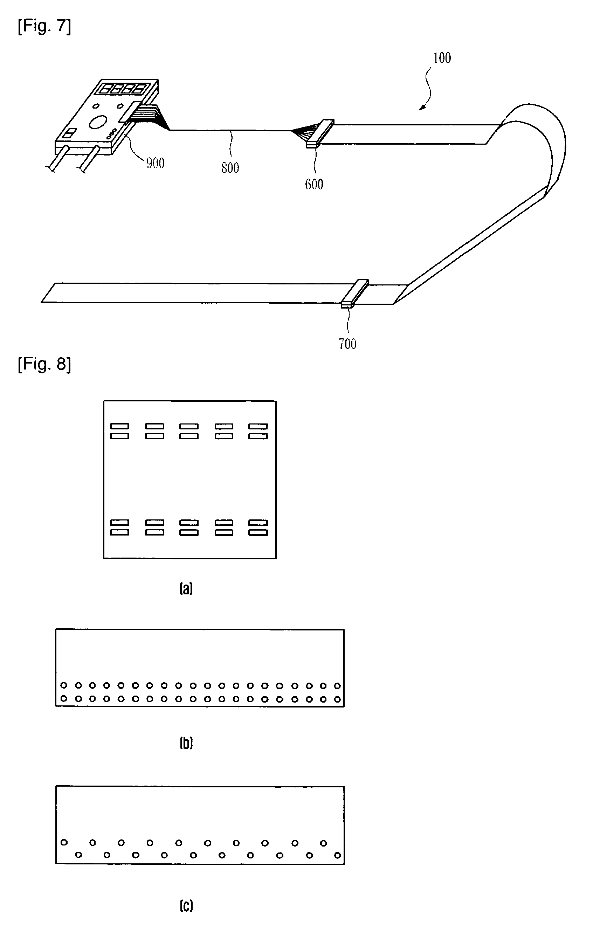

Another example of the hole 510 will be described with reference to Figure 8. In case of (a), rectangular holes are arranged in parallel at regular intervals in the longitudinal direction of the moisture detection tape 100 so that each resistance line can be independently exposed.

In case of (b), circular holes are arranged in parallel at regular intervals in the longitudinal direction of the moisture detection tape 100 so that each resistance line can be independently exposed like (a). In case of (c), circular holes are alternately formed over two resistance lines.

A controller provides a certain change to an analog signal value of a signal read from the moisture detection tape 100 by means of the above holes. A detection sensitivity might by affected by means of an error in the leak detection distance and a liquid, it is possible to enhance a detection sensitivity by providing a proper change with the help of the holes.

The detection of the leak will be described.

A moisture detection tape 100 is attached to a portion in which moisture will be detected.

Since the adhesive layer 200 is attached to a lower surface of the moisture detection tape 100, it can be easily attached.

A few voltages flow between the resistance lines 401 and 402 and the conductive lines 403 and 404.

As leakage occurs, when water, chemical solution or other moisture (conductive material) drops on a certain portion of the upper side of the moisture detection tape 100, as shown in Figure 3, a closed circuit is formed by means of the leak 440 between the resistance line 401 and the resistance line 403.

Since the resistance value and voltage change depending on the position of the leak 400, as shown in Figure 7, the controller 900 receives the resistance and voltage values and computes the distance of the leak based on the resistance and voltage values.

The controller 10 compares a computed value with a previously set value and indicates the detection distance and generates an alarm sound.

When the moisture detection tape 100 is cut by means of an external force, the cut state is detected. Namely, since the resistors 412 are provided in each area, as shown in Figure 4, when a cut occurs in a certain area, the resistance value of the resistor positioned just be fore the cut portion is read by means of the controller 900 for thereby computing the cut position.

Figure 7 is a view illustrating a connection state that a plurality of moisture detection tapes 100 are extended and connected, and a connection with the controller 900. When the length for leakage detection is long, the moisture detection tapes 100 are connected with each other by using a connector 700.

The conductive line layer 400 and the signal line 800 are connected with each other through the connector 600 and are connected with the controller 900.

Figure 6 is a view illustrating another pattern state of the conductive line layer 400. Mirror-shaped conductive lines 421, 422, 425, 426, 433 and 427, 428, 531, 432, 434 are spaced apart from one another and are sequentially formed from both outer sides of the conductive line layer 400, and resistors 423, 424 and 429, 430 are formed at regular intervals in the conductive lines 421, 422, and 427, 428. The conductive lines 421 and 422 and the conductive lines 525 and 526 equipped with the resistors 423 and 424 form the same circuit as the circuit of Figure 3 for thereby performing a leakage detection. The conductive lines 427 and 428 and the conductive lines 431 and 432 equipped with the resistors 429 and 430 of the opposite side of the mirror shape have the same circuit construction.

The circuit for detecting the cut of the moisture detection tape 100 might be formed in the same construction as Figure 2. The resistors 435 are arranged at regular intervals between the conductive lines 433 and 434, so the cut can be detected as shown in Figure 4.

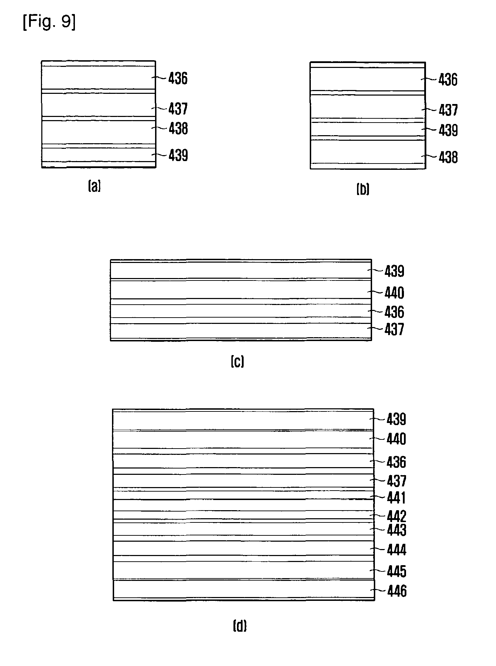

Figure 9 is a view illustrating a formation state of various patterns of the conductive line layers 400. In case of (a), conductive lines 436 and 437 are formed in parallel for a transmission of two signals. The conductive line 438 for a liquid detection and the resistance line 439 for a liquid detection are sequentially formed.

In case of (b), the conductive line 438 for a liquid detection and the resistance line 439 for a liquid detection are inverted in their sequence as compared to the case (a).

In case of (c), a pair of resistance lines 439 and 440 for a liquid detection and a pair of conductive lines 436 and 437 for a signal transmission are arranged in parallel, and in case of (d), a resistance line 441 is further provided for detecting a cut distance of the moisture detection tape 100 as compared to the arrangement of the case (c), but it has the mirror arrangement opposite to the above arrangement. Namely, the resistance line 442 for detecting a cut distance, a pair of the conductive lines 443 and 444 for a signal transmission, and a pair of the resistance lines 445 and 446 for a liquid detection are sequentially arranged.

In case of (e), the conductive line 436 for a signal transmission, the conductive line 438 for a liquid detection, the conductive lines 437 for a signal transmission, a pair of the conductive lines 447 and 448 for a RS 485 communication, and a pair of the power supply lines 449 and 450 for a power supply are sequentially arranged.

### Industrial Applicability

As described above, according to the leak sensor apparatus for sensing moisture according to the present invention, it is easy to install since it can be directly attached to a leakage possible portion (wall, pipe, facility or something) in a tape type, and it can be easily installed without a bracket, and a sensor tape can be cut by a desired length and can be easily used.

In addition, since the tape film, is made of PET, PTFE, PVC or the like, the tape film is strong to a chemical solution such as strong acid, strong alkali or organic liquid.

When the leak sensor apparatus is installed on a floor, since a film is thin and is attached by means of a tape attaching method, a person, a facility, a cart or the like might walk or run over the apparatus, which ensures an easy installation and use.

The sensor tape might be cut and used, so multiple tapes might be attached to one controller (AMP).

The time needed for removing moisture after moisture is detected is short. Since the tape film is used, removing moisture is very easy.

Since the sensor tape is made in a printed method, a product price is low, and it is possible to reliably detect a leakage in a wide area at a lower cost.

### Sequence Listing

film layer, conductive line layer, leak, hole

## Claims

1. A leak sensor apparatus (100) for sensing moisture formed in a tape shape for sensing moisture when leakage occurs, **characterised in that** it comprises:
a base film (300);
a conductive line layer (400);
a protection film layer (500),
wherein said base film (300), said conductive line layer (400), and said protection film layer (500) are sequentially stacked in an upward direction; and
wherein the conductive line layer (400) is printed, which conductive line layer (400) includes a resistance line (401, 402, 406, 407, 439, 440) having a certain resistance value per unit area in a longitudinal direction, and a conductive line (403, 404, 408, 409, 436, 437, 438) which is spaced apart from the resistance line and is formed in parallel with the resistance line,
with said protection film layer being equipped with holes (510) at regular intervals so that the resistance and conductive lines of the conductive line layer (400) can be exposed to the outside.

2. The apparatus of claim 1, wherein said conductive line layer (400) further has two conductive lines (410, 411) in a longitudinal direction, with resistors (412) being disposed between the conductive lines (410, 411) at regular intervals.

3. The apparatus of claim 1, wherein said holes (510) each have a width wise elongated groove and are formed in a longitudinal direction at regular intervals, with the resistance line (401, 402) and conductive line (403, 404) being exposed through one hole.

4. The apparatus of claim 1, wherein said hole (510) has a pair of elongated grooves in a longitudinal direction, with the resistance line (401, 402) and conductive line (403, 404) being independently exposed through one hole (510).

5. The apparatus of claim 1, wherein said holes (510) each have a pair of circular shapes and are formed in a longitudinal direction at regular intervals, with the resistance line (401, 402) and conductive line (403, 404) being independently exposed through one hole.

6. The apparatus of claim 1, wherein said holes (510) are formed in circular shapes and are formed in a longitudinal direction at regular intervals, with the resistance line (401, 402) and conductive line (403, 404) being independently exposed through one hole (510), with said holes (510) allowing the resistance line and the conductive line to alternately be exposed.

7. The apparatus of claim 1, wherein said conductive line layer (400) has conductive lines (436, 437) arranged in parallel for a transmission of two signals, and a conductive line (438) for a liquid detection and a resistance line (439) for a liquid detection are sequentially formed.

8. The apparatus of claim 1, wherein conductive line layer (400) has conductive lines (436, 437) arranged in parallel for a transmission of two signals, and a resistance line (439) for a liquid detection and a conductive line (438) for a liquid detection are sequentially formed.

9. The apparatus of claim 1, wherein said conductive line layer has a pair of parallel resistance lines (439, 440) for a liquid detection and a pair of parallel conductive lines (436, 437) for a signal transmission.

10. The apparatus of claim 1, wherein said conductive line layer has a pair of resistance lines (439, 440) for a liquid detection, a pair of conductive lines (436, 437) for a signal transmission, and a resistance line (441) for detecting a cut distance, and further has a resistance line (442) for detecting a cut distance, a pair of conductive lines (443, 444) for a signal transmission, and a pair of resistance lines (445, 446) for a liquid detection, which are sequentially formed.

11. The apparatus of claim 1, wherein said conductive line layer (400) has a conductive line (436) for a signal transmission, a conductive line (438) for a liquid detection, a resistance line (439) for a liquid detection, a conductive line (437) for a signal transmission, a pair of conductive lines (447, 448) for a RS 485 communication, and a pair of power supply lines (449, 450) for a power supply, which are sequentially formed.

## Patentansprüche

1. Lecksensorvorrichtung (100) zur Erkennung von Feuchtigkeit, die bandförmig ausgebildet ist, um Feuchtigkeit zu erkennen, wenn eine Leckage auftritt,
**dadurch gekennzeichnet, dass** sie aufweist:
einen Basisfilm (300);
eine leitende Leitungen aufweisende Schicht (400);
eine Schutzfilm-Schicht (500),
wobei der Basisfilm (300), die leitende Leitungen aufweisende Schicht (400) und die Schutzfilm-Schicht (500) aufeinanderfolgend übereinandergeschichtet in Aufwärtsrichtung angeordnet sind; und
wobei die leitende Leitungen aufweisende Schicht (400) gedruckt ist, wobei die leitende Leitungen aufweisende Schicht (400) eine widerstandsbehaftete Leitung (401, 402, 406, 407, 439, 440), die einen gewissen Widerstandswert je Flächeneinheit in Längsrichtung aufweist, und eine leitende Leitung (403, 404, 408, 409, 436, 437, 438) beinhaltet, die beabstandet zur widerstandsbehafteten Leitung angeordnet ist und parallel zur widerstandsbehafteten Leitung ausgebildet ist,
wobei die Schutzfilm-Schicht mit Löchern (510) in regelmäßigen Abständen ausgerüstet ist, so dass die widerstandsbehafteten und leitenden Leitungen der leitende Leitungen aufweisenden Schicht (400) nach außen hin freiliegen können.

2. Vorrichtung nach Anspruch 1, wobei die leitende Leitungen aufweisende Schicht (400) weiter zwei leitende Leitungen (410, 411) in Längsrichtung aufweist, wobei Widerstände (412) zwischen den leitenden Leitungen (410, 411) in regelmäßigen Abständen angeordnet sind.

3. Vorrichtung nach Anspruch 1, wobei die Löcher (510) jeweils eine in Breitenrichtung längliche Nut aufweisen und in Längsrichtung in regelmäßigen Abständen ausgebildet sind, wobei die widerstandsbehaftete Leitung (401, 402) und die leitende Leitung (403, 404) durch ein einziges Loch hindurch freiliegen.

4. Vorrichtung nach Anspruch 1, wobei das Loch (510) ein Paar von in Längsrichtung länglichen Nuten aufweist, wobei die widerstandsbehaftete Leitung (401, 402) und die leitende Leitung (403, 404) in unabhängiger Weise durch ein einziges Loch (510) hindurch freiliegen.

5. Vorrichtung nach Anspruch 1, wobei die Löcher (510) jeweils ein Paar von kreisförmigen Formen aufweisen und in Längsrichtung in regelmäßigen Abständen ausgebildet sind, wobei die widerstandsbehaftete Leitung (401, 402) und die leitende Leitung (403, 404) in unabhängiger Weise durch ein einziges Loch (510) hindurch freiliegen.

6. Vorrichtung nach Anspruch 1, wobei die Löcher (510) in kreisförmigen Formen ausgebildet sind und in Längsrichtung in regelmäßigen Abständen ausgebildet sind, wobei die widerstandsbehaftete Leitung (401, 402) und die leitende Leitung (403, 404) in unabhängiger Weise durch ein einziges Loch (510) hindurch freiliegen, wobei die Löcher (510) ermöglichen, dass die widerstandsbehaftete Leitung und die leitende Leitung abwechselnd freiliegen.

7. Vorrichtung nach Anspruch 1, wobei die leitende Leitungen aufweisende Schicht (400) leitende Leitungen (436, 437) aufweist, die parallel für eine Übertragung von zwei Signalen angeordnet sind, und eine leitende Leitung (438) für eine Flüssigkeitserfassung und eine widerstandsbehaftete Leitung (439) für eine Flüssigkeitserfassung aufeinanderfolgend ausgebildet sind.

8. Vorrichtung nach Anspruch 1, wobei die leitende Leitungen aufweisende Schicht (400) leitende Leitungen (436, 437) aufweist, die parallel für eine Übertragung von zwei Signalen angeordnet sind, und eine widerstandsbehaftete Leitung (439) für eine Flüssigkeitserfassung und eine leitende Leitung (438) für eine Flüssigkeitserfassung aufeinanderfolgend ausgebildet sind.

9. Vorrichtung nach Anspruch 1, wobei die leitende Leitungen aufweisende Schicht ein Paar von parallelen widerstandsbehafteten Leitungen (439, 440) für eine Flüssigkeitserfassung und ein Paar von parallelen leitenden Leitungen (436, 437) für eine Signalübertragung aufweist.

10. Vorrichtung nach Anspruch 1, wobei die leitende Leitungen aufweisende Schicht ein Paar von widerstandsbehafteten Leitungen (439, 440) für eine Flüssigkeitserfassung, ein Paar von leitenden Leitungen (436, 437) für eine Signalübertragung, und eine widerstandsbehaftete Leitung (441) zum Erfassen eines Schnittabstandes aufweist, und weiter eine widerstandsbehaftete Leitung (442) zum Erfassen eines Schnittabstandes, ein Paar von leitenden Leitungen (443, 444) für eine Signalübertragung, und ein Paar von widerstandsbehafteten Leitungen (445, 446) für eine Flüssigkeitserfassung aufweist, die aufeinanderfolgend ausgebildet sind.

11. Vorrichtung nach Anspruch 1, wobei die leitende Leitungen aufweisende Schicht (400) eine leitende Leitung (436) für eine Signalübertragung, eine leitende Leitung (438) für eine Flüssigkeitserfassung, eine widerstandsbehaftete Leitung (439) für eine Flüssigkeitserfassung, eine leitende Leitung (437) für eine Signalübertragung, ein Paar von leitenden Leitungen (447, 448) für eine RS-485 Kommunikation, und ein Paar von Stromversorgungsleitungen (449, 450) zur Stromversorgung aufweist, die aufeinanderfolgend ausgebildet sind.

## Revendications

1. Appareil détecteur de fuites (100) pour la détection de l'humidité formée dans un objet en forme de bande lorsqu'une fuite se produit, **caractérisé en ce qu'**il comprend :
un film de base (300) ;
une couche à ligne conductrice (400) ;
une couche de film de protection (500),
dans lequel ledit film de base (300), ladite couche à ligne conductrice (400) et ladite couche de film de protection (500) sont empilés de manière séquentielle vers le haut ; et
dans lequel la couche à ligne conductrice (400) est imprimée, laquelle couche à ligne conductrice (400) comprend une ligne de résistance (401, 402, 406, 407, 439, 440) présentant une certaine valeur de résistance par unité de surface dans une direction longitudinale, et une ligne conductrice (403, 404, 408, 409, 436, 437, 438) espacée de la ligne de résistance et formée parallèlement à la ligne de résistance,
ladite couche de film de protection étant équipée de trous (510) à intervalles réguliers de sorte que les lignes de résistance et conductrices de la couche à ligne conductrice (400) puissent être exposées à l'extérieur.

2. Appareil selon la revendication 1, dans lequel ladite couche à ligne conductrice (400) présente en outre deux lignes conductrices (410, 411) dans une direction longitudinale, des résistances (412) étant disposées entre les lignes conductrices (410, 411) à intervalles réguliers.

3. Appareil selon la revendication 1, dans lequel lesdits trous (510) présentent chacun une rainure allongée dans le sens de la largeur et sont formés dans une direction longitudinale à intervalles réguliers, la ligne de résistance (401, 402) et la ligne conductrice (403, 404) étant exposées au travers d'un trou.

4. Appareil selon la revendication 1, dans lequel ledit trou (510) présente une paire de rainures allongées dans une direction longitudinale, la ligne de résistance (401, 402) et la ligne conductrice (403, 404) étant exposées indépendamment au travers d'un trou (510).

5. Appareil selon la revendication 1, dans lequel lesdits trous (510) présentent chacun une paire de formes circulaires et sont formés dans une direction longitudinale à intervalles réguliers, la ligne de résistance (401, 402) et la ligne conductrice (403, 404) étant exposées indépendamment au travers d'un trou.

6. Appareil selon la revendication 1, dans lequel lesdits trous (510) sont formés dans des formes circulaires et sont formés dans une direction longitudinale à intervalles réguliers, la ligne de résistance (401, 402) et la ligne conductrice (403, 404) étant exposées indépendamment au travers d'un trou (510), lesdits trous (510) permettant à la ligne de résistance et à la ligne conductrice d'être exposées alternativement.

7. Appareil selon la revendication 1, dans lequel ladite couche à ligne conductrice (400) présente des lignes conductrices (436, 437) disposées parallèlement pour une transmission de deux signaux, et une ligne conductrice (438) pour une détection de liquide et une ligne de résistance (439) pour une détection de liquide sont formées de manière séquentielle.

8. Appareil selon la revendication 1, dans lequel ladite couche à ligne conductrice (400) présente des lignes conductrices (436, 437) disposées parallèlement pour une transmission de deux signaux, et une ligne de résistance (439) pour une détection de liquide et une ligne conductrice (438) pour une détection de liquide sont formées de manière séquentielle.

9. Appareil selon la revendication 1, dans lequel ladite couche à ligne conductrice présente une paire de lignes de résistance parallèles (439, 440) pour une détection de liquide et une paire de lignes conductrices parallèles (436, 437) pour une transmission de signaux.

10. Appareil selon la revendication 1, dans lequel ladite couche à ligne conductrice présente une paire de lignes de résistance (439, 440) pour une détection de liquide, une paire de lignes conductrices (436, 437) pour une transmission de signaux et une ligne de résistance (441) pour la détection d'une distance de coupe, et présente en outre une ligne de résistance (442) pour la détection d'une distance de coupe, une paire de lignes conductrices (443, 444) pour une transmission de signaux, et une paire de lignes de résistance (445, 446) pour une détection de liquide, qui sont formées de manière séquentielle.

11. Appareil selon la revendication 1, dans lequel ladite couche à ligne conductrice (400) présente une ligne conductrice (436) pour une transmission de signaux, une ligne conductrice (438) pour une détection de liquide, une ligne de résistance (439) pour une détection de liquide, une ligne conductrice (437) pour une transmission de signaux, une paire de lignes conductrices (447, 448) pour une communication RS 485, et une paire de conduites d'alimentation électrique (449, 450) pour une alimentation électrique, qui sont formées de manière séquentielle.
